# EUROPEAN PATENT APPLICATION

(11) **EP 1 277 536 A2**
(43) Date of publication of application: **22.01.2003**
(21) Application number: 02380117.8
(22) Date of filing: 07.06.2002
(51) Int. Cl.: B23D 55/04

(54) **Method for separation of the piece cut with a bandsaw and a band sawing machine**

(30) Priority: 19.07.2001 ES 200101694
(71) Applicant: Danobat, S. Coop., 20870 Elgoibar (Guipuzkoa) (ES)
(72) Inventor: Aizpurua Oteiza, Julian, 20720 Azkoitia (Gipuzkoa) (ES)

(57) **Abstract**

The method for the separation of the severed piece (3) of a metal bar (2) on a machine (1) with a vertical downward and upward stroke band sawing head prevents the bandsaw blade (4) from rubbing against both cutting surfaces during the upward return stroke (10) of the bandsaw blade, for which purpose the sawing head (16) continues its downward stroke (17) until the bandsaw blade is housed in a lower recess (15), whereupon the bar (2) moves successively in the forward direction (7), pushing the severed piece (3), and then in the opposite direction (9), leaving a clearance (E) between the bar (2) and the piece (3) for the upward return stroke (18). The bandsaw blade (4) housing recess (15) is formed by means of two plates (13,14) supporting the bar and the piece, and two piece clamping device (19) guides (21).

## Description

### Technical field

The present invention relates to the crosscutting of metal bars with a horizontal band sawing machine, which is provided with means for clamping the bar and a bar feeding conveyor table.

### Prior art

An example of the horizontal band sawing machine with vertical up and down movement of the bandsaw blade is disclosed in the publication US-A-4241630. This known machine cuts a workpiece of given length from the front end of a metal bar fed on a roller conveyor table. The bar is fed by means of a carriage with a longitudinal traverse, which moves it for the cutting of the piece the same distance as the length of the piece to be cut. The bandsaw blade is supported in a sawing head assembly which carries out a downward stroke, according to a substantially vertical cutting plane, and an upward return stroke of the bandsaw blade after a piece is severed from the front end of the bar relative to the cutting plane. On the known sawing machine, the carriage has a forward movement independent of the conveyor table and the severed portion of piece is held between two clamps guided on the same device which is supporting the severed piece.

The bandsaw blades of horizontal band sawing machines, those which are made of a hard material such as tungsten carbide, have a given blade height and a row of set teeth forming a cutting channel of greater width than the thickness of the bandsaw blade. After crosscutting a piece from the end of a bar, the bandsaw blade has to be withdrawn in an upward direction to return it to its rest position and initiate the next cut. The bandsaw blade teeth are then subjected to lateral rubbing against the cutting surfaces of the bar and of the severed piece, thereby causing wear and shortening useful life.

### Disclosure of the invention

The object of the present invention is a method for separating the severed piece of a metal bar, on a horizontal band sawing machine, and the subsequent upward return stroke of the bandsaw blade in order to prevent saw blade and the row of set teeth from rubbing against the cut metal surfaces.

A further object of the present invention is a horizontal band sawing machine with a sawing head with a vertical upward and downward movement for the cutting of metal bar or the like, with a saw blade that advances according to a substantially vertical cutting plane, and which is provided with means for the clamping and feeding of the bar to be cut in a longitudinal direction, and with means for clamping and supporting the severed piece at the front end of the bar, in order to effect the method of separation of the severed piece and the subsequent return movement of the saw blade in an upward direction.

The method of separation of the severed piece also comprises the displacement of the metal bar when the cutting operation has been performed, in the direction opposite to that of feed, leaving ample clearance between the bar and the severed piece, by way of which the saw blade is finally raised. After cutting, the downward stroke of the sawing head over the vertical cutting plane continues until the saw blade is housed in a recess below the level of the conveyor table, and the bar then moves successively in the direction of feed, pushing the severed piece to separate it from the cutting plane, and then in the opposite direction.

The band sawing machine for carrying out the method according to the invention solves the problem of constructing a housing for the saw blade when it descends below the level of the table after cutting off the piece, so that the bar and severed piece support plates and the device for clamping the severed piece do not interfere with the downward and upward path of the saw blade below the level of the table and they enable an ample clearance to be created on either side of the cutting plane for the passage of the bandsaw blade.

### Description of the drawings

FIG. 1 is a front view of a horizontal band sawing machine for carrying out the method of the present invention.
FIG. 2 is a side view of the band sawing machine of FIG. 1, showing the position of the bandsaw blade after severing a piece.
FIG. 3 is a side view of the band sawing machine of FIG. 1, showing the position of the bar and the severed piece at a subsequent stage to that of FIG. 2.
FIG. 4 is a side view of the band sawing machine of FIG. 1, showing the position of the bar and the severed piece at the bandsaw blade return stroke stage subsequent to FIG. 3.

### Detailed description of the preferred embodiment

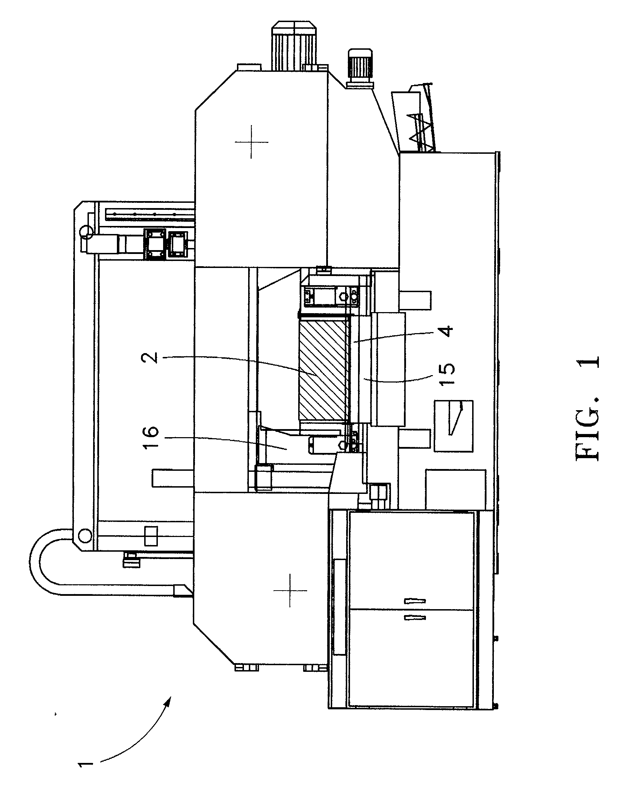

In reference to FIG. 1-4, the embodiment of the horizontal band sawing machine represented is identified with number 1, for the cutting of a metal bar 2 or the like, and to carry out the method according to the invention for the separation of the severed piece 3 at the front end of the bar and the subsequent return stroke of the bandsaw blade used in an upward direction.

On a band sawing machine according to the invention, the machine 1 is automatic and the bar 2 is fed in a direction of horizontal forward movement 7 over a roller conveyor table 5 by means of a carriage 6 provided with jaws for clamping the bar 2 facing towards a substantially vertical cutting plane 8, which defines a front side 11 and a feed side 12. The cross-sectional dimension "D" or diameter of the bar to be cut may be as much, for instance, as 520 mm. The carriage 6 has a forward movement 7 independent of the table 5, and automatic means for moving the carriage in the direction opposite 9 to that of feed. The bar 2 is clamped by a jaw device (not represented in the drawings) coupled to the carriage 6 for its forward movement 7 over a distance the same as the length of the piece portion 3 to be severed.

The piece 3 is supported during and after the cutting operation by a support plate 14 situated on the front side 11, at the same level as the table 5. A jaw device 19 clamps the piece 3 at a point close to the cutting plane 8 and is transversely extendible for the release of the piece 3 after cutting. The severed piece 3 is finally collected on a delivery table 10 extending longitudinally after the support plate 14 and at the same level as this.

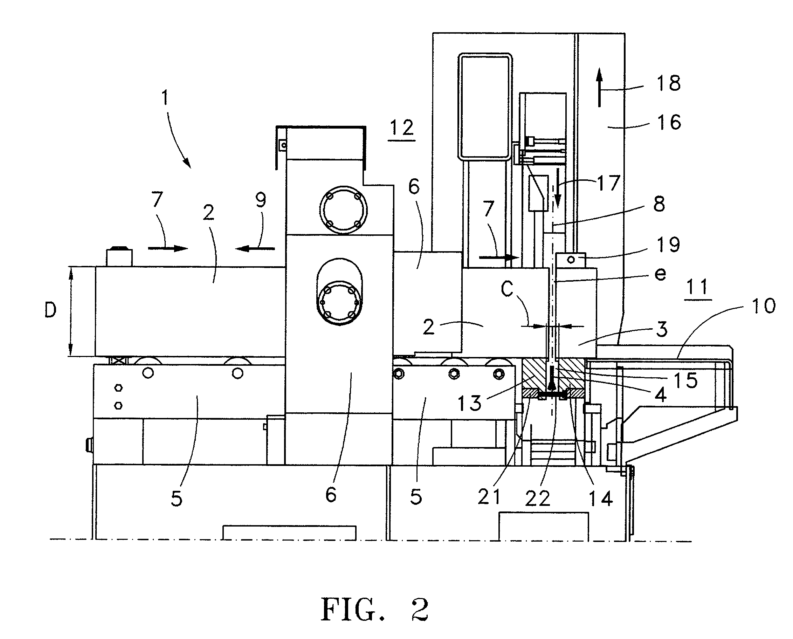

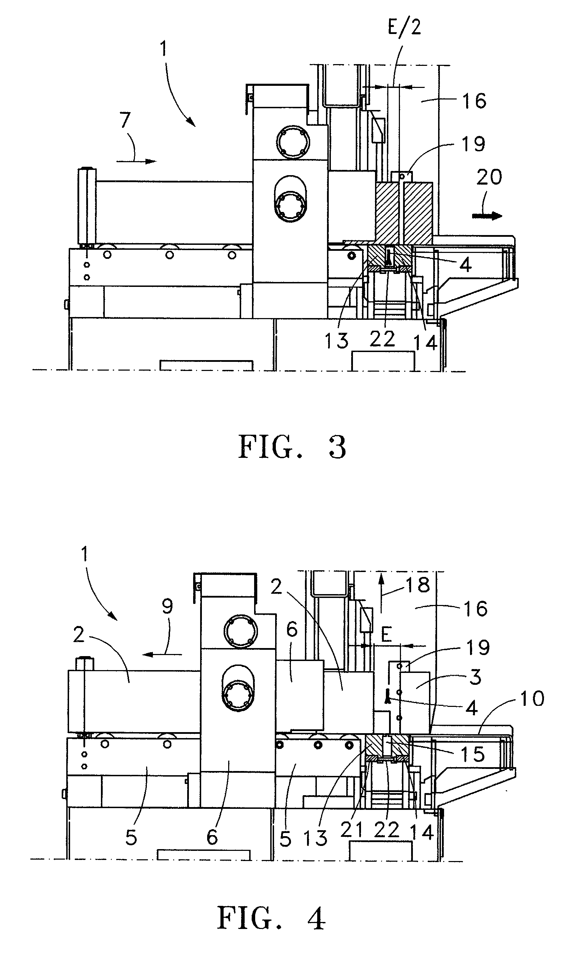

The saw blade 4 for cutting metal bars 2 is often of a hard material such as tungsten carbide and provided with a row of set teeth which widens the cutting channel of the saw in respect of the thickness of the blade, so for its upward return stroke the row of saw teeth requires a widening of a clearance or cutting channel "e" left by the saw blade 4 during cutting between the bar 2 and the piece 3. In one example of embodiment the bandsaw blade used in cutting has a blade height of 54 mm. The saw blade is supported in a sawing head 16 provided with means (not shown in the drawings) for its downward stroke (FIG. 2) for the cutting of the piece 3, and for its upward return stroke 18 during the cutting (FIG. 4), passing through the same cutting plane 8.

In the method according to the invention, for the separation of the severed piece from the metal bar 2 and the subsequent return stroke of the saw blade on a horizontal band sawing machine 1, the saw blade has severed the piece 3 leaving the cutting clearance "e" between bar 2 and piece 3, and it continues its downward stroke 17 until the blade 4 is housed in a recess 15 below the level of the table 5. The device 19 now opens the jaws for the piece 3, thereby releasing it to permit its free longitudinal movement, and the bar 2 is subjected to a preset displacement 20 in the direction of feed 7, pushing the severed piece 3 over the delivery table 10, still guided on its support plate 14.

The movement 20 of the bar 2 and the piece 3 is equivalent to half the final clearance width "E" needed for the passage of the blade 4 on its upward return stroke 18. The carriage 6 then slides automatically in the opposite direction 9 drawing the bar 2 a longitudinal distance equivalent to said required clearance "E", which is thereby centred in relation to the cutting plane 8. The sawing head 15 is now raised effecting the upward stroke 18 for the return of the bandsaw blade above the bar 2 up to its rest position for the start of the next cutting operation.

On the band sawing machine to carry out the method of the invention, the roller table 5 does not extend up to the cutting plane 8 itself, so a support plate 13 for supporting the bar is provided on the feed side 12 adjacent to the cutting plane 8. The recess 15 for housing the bandsaw blade 4 is formed by the two respective plates 13, 14 for supporting the bar 2 and the piece 3, of the same height below the level of the table 5 and separated by distance "C", which is sufficiently larger than the thickness of the cutting channel "e" to allow the blade 4 to return upwards without risk of rubbing, while at the same time the bar 2 and the severed piece 3 are retained on the respective support surfaces provided by the plates 13, 14.

The jaws 19 for the piece 3 have a jaw guide 21 below the support plates 13, 14, and at their lower end the support plates 13,14 have a coupling member 22 below the housing recess 15 which does not interfere with the formation of the latter. In accordance with its length, after the separation movement 20 the severed piece 3 is also supported on the delivery table 10 as well as on the support plate 14.

The method for separation of the severed piece 3 according to the invention may also be performed with semiautomatic type machines, which do not have a carriage 6 for feeding the bar 2, the latter being pushed by manual or semiautomatic means.

## Claims

1. Method of separation of the piece (3) severed in a horizontal band sawing machine (1) equipped with a head (16) which is provided with a vertical upward (17) and downward (18) movement for cutting an elongated metal bar or the like, a bar conveyor table (5) defining a longitudinal direction of the machine, and other manual or automatic means (6) for the longitudinal feed (7) of the bar (2) towards a substantially vertical transverse cutting plane (8), an device (19,21) extendible in a traverse direction for clamping the severed piece (3), and means (5, 10, 13, 14) for the horizontal support of the bar (2) and the piece (3), wherein the bandsaw blade (4), effecting a downward advance (17), leaves a cutting channel (e) between the bar (2) and the piece (3), **characterised in that** for the return stroke of the bandsaw blade (4) above the bar (2), in an initial step after cutting, the saw blade (4) continues its downward advance (17) until being housed below the level of said support means (5,10,13,14) surface, and the clamping device (19,21) releases the piece (3), and the bar (2) is then displaced by said feeding means (5,6) a predetermined length (E/2) in the direction of the bar feed (7), pushing (20) the severed piece (3) to separate it from the cutting plane (8), and in a second step the bar (2) is displaced in the opposite direction (9) to the feed direction (7) a longitudinal distance greater than the previous pushing displacement to separate the bar (2) from the cutting plane (8), and leaving a separation clearance (E) between the bar (2) and the piece (3) on the cutting plane (8), through which the bandsaw blade (4) is raised by the sawing head (16), passing through said clearance (E) without rubbing.

2. Horizontal band sawing machine equipped with a vertical ascending and descending sawing head to perform the method of claim 1, wherein said support means (5,10,13,14) for the bar (2) and the severed piece (3), comprises a support plate (13) for the end of the bar (3) and a support plate (14) for the piece, separated on the cutting plane at a distance "C" apart, forming a saw blade (4) housing recess (15) below the level of the support means (5, 10, 13, 14) surface, and said clamping device (19,21) is situated adjacent to the cutting plane and comprises two jaws (16), at least one of which is extendible on a guide (22) situated below the support plates (13,14) so as not to interfere with the housing recess (15).

3. Band sawing machine according to claim 2, wherein for the collection of the severed piece (3) a part of the support means (10,14) for the severed piece (3) is arranged with the piece support plate (14) adjoining the cutting plane (8) and a delivery table (10), so that, after said separating displacement (20), the piece (3) is supported between the support plate (14) and the delivery table (10).

4. Band sawing machine according to claim 2, wherein the support plates (13,14) for the bar (2) and the severed piece (3) separated on either side of the cutting plane are joined for purposes of their secure fastening on the machine in the longitudinal direction by a coupling member (21,22) below the bandsaw blade housing recess (15), which prevents the support plates (13,14) from moving in a longitudinal direction.
